# EUROPÄISCHE PATENTSCHRIFT

(11) **EP 0 944 786 B1**
(45) Veröffentlichungstag und Bekanntmachung des Hinweises auf die Patenterteilung: **21.11.2001**
(21) Anmeldenummer: 97952711.6
(22) Anmeldetag: 09.12.1997
(51) Int. Cl.: F16G 13/16

(54) **ENERGIEZUFÜHRUNGSKETTE**
ENERGY-SUPPLY CHAIN
CHAINE D'ALIMENTATION EN ENERGIE

(30) Priorität: 23.12.1996 DE 29622349 U; 14.04.1997 DE 19715532
(43) Veröffentlichungstag der Anmeldung: 29.09.1999
(73) Patentinhaber: IGUS SPRITZGUSSTEILE FÜR DIE INDUSTRIE GmbH, D-51147 Köln (DE)
(72) Erfinder: BLASE, Günter, D-51429 Bergisch Gladbach (DE); FISCHER, Kurt, D-53773 Hennef (DE)
(74) Vertreter: Kierdorf, Theodor, Dipl.-Ing.
(86) Internationale Anmeldenummer: DE9702863
(87) Internationale Veröffentlichungsnummer: WO9828556

(56) Entgegenhaltungen:
- DE-A- 3 531 066
- DE-C- 3 730 586
- DE-C- 3 909 797
- US-A- 3 779 003
- PATENT ABSTRACTS OF JAPAN vol. 9, no. 124 (M-383) [1847] , 29.Mai 1985 & JP 60 008543 A (HAAMO K.K.), 17.Januar 1985,

## Beschreibung

Die Erfindung betrifft eine Energiezuführungskette zur Aufnahme von Kabeln, Schläuchen oder dergleichen, mit einer Anzahl gelenkig miteinander verbundener Kettenglieder, die durch zueinander parallele Laschen und diese verbindende Querstege gebildet werden, wobei die Laschen seitliche, ketteneinwärts gerichtete Rastvorsprünge zur lösbar rastenden Aufnahme entsprechend ausgebildeter Querstege oder Zwischenstücke aufweisen. Derartige Energiezuführungsketten dienen zur Führung von Kabeln, Schläuchen und dergleichen Energieleitungen von einem Anschlußpunkt zu einem anderen Anschlußpunkt, wobei wenigstens einer der Anschlußpunkte ortsveränderlich ist.

Eine Energiezuführungskette der eingangs genannten Art ist beispielsweise aus der DE 35 31 066 A1 bekannt. Die dort beschriebene Energiezuführungskette besteht im wesentlichen aus abwechselnd mit Zapfen und kreisförmigen Bohrungen versehenen Laschen, die mittels lösbarer oberer und unterer Querstege miteinander verbunden sind und jeweils ein Kettenglied bilden, wobei die Zapfen eines Kettengliedes in die Bohrungen des folgenden Kettengliedes eingreifen, so daß die Kettenglieder gegeneinander verschwenkbar sind. Zur Aufnahme der lösbaren oberen und unteren Querstege sind die Laschen mit einwärts gerichteten Ansätzen bzw. Raststäben versehen, die mit Rastausnehmungen der Querstege zusammenwirken. Die Querstege werden in einfacher Art und Weise durch Aufschnappen auf die Raststäbe der Laschen mit diesen unverlierbar verbunden. Insbesondere da die jeweils ein Kettenglied bildenden Laschen jeweils spiegelbildlich zueinander ausgebildet sind und die oberen und unteren Querstege identisch sind, ist die bekannte Energiezuführungskette einfach herzustellen und einfach montierbar.

Eine andere ähnliche Energiezuführungskette ist aus der DE 39 09 797 bekannt. Diese Energiezuführungskette besteht ebenfalls aus gegeneinander schwenkbaren, gleichartigen, parallelen Laschen, die durch lösbare obere und untere Querstege miteinander verbunden sind, wobei die Enden der Querstege lösbar an auf gleicher Höhe gelegenen Laschen gehalten sind. Der mittlere Bereich einer jeden Kettenlasche ist bei dieser bekannten Energiezuführungskette beiderseitig der Mittellängsebene der Kettenlasche mit oberen und unteren Ansätzen versehen, die jeweils eine T-förmige Nut zur Aufnahme der entsprechend ausgebildeten Enden der Querstege aufweisen. Die Enden der Querstege sind T-förmig ausgebildet und seitlich in die durch die Ansätze gebildeten Nuten einschiebbar.

Zur Erweiterung des nutzbaren Kettenquerschnitts werden in der DE 39 09 797 nachrüstbare längliche Aufsatzstücke vorgeschlagen, die in die T-förmigen Nuten jeweils paarweise an zwei auf gleicher Höhe gelegenen Laschen einschiebbar sind und die zwischen sich Querstege gleicher Ausbildung und mit gleichen Befestigungsmitteln wie die Kettenquerstege der Laschen aufnehmen. Diese Aufsatzstücke sitzen mit einer Wand auf dem oberen oder unteren Rand der Laschen auf und bilden somit eine Verlängerung der Mittellängsebene der Laschen. Folglich bedarf es nur einer zweilaschigen Kette, an welcher mittels der Aufsatzstücke weitere, zu den Kabeln oder Leitungen dieser Kette zusätzliche Kabel aufnehmende Elemente anbringbar sind, so daß der Nutzquerschnitt und damit die Aufnahmemöglichkeit der Kette beachtlich erweitert werden kann, wobei stets gleich ausgebildete Stege Anwendung finden können.

Die in der DE 39 09 797 vorgeschlagene Lösung bietet zwar den Vorzug, daß stets gleich ausgebildete Querstege Anwendung finden können, bringt jedoch den Nachteil mit sich, daß die Montage der den erweiterten Nutzquerschnitt der Kette bildenden Elemente recht aufwendig ist. Stets müssen auf jeder Lasche die Aufsatzstücke jeweils separat montiert werden, das bedeutet, daß erforderlichenfalls an jedem Kettenglied insgesamt vier Aufsatzstücke montiert werden müssen, zusätzlich müssen zwischen diesen ein oder mehrere Querstege montiert werden. Da die Querstege in sich in Kettenlängsrichtung erstreckende T-förmige Nuten eingeschoben werden, ist ein nachträgliches Öffnen der Energiezuführungskette zum Einlegen oder Herausnehmen von Kabeln aufwendig. Sind beispielsweise zur Innenraumaufteilung des Erweiterungsquerschnitts oder des ursprünglichen Kettenquerschnitts mehrere Querstege als Zwischenböden übereinander angeordnet, so ist die Kette zum Einlegen von Kabeln in den durch die eigentlichen Laschen begrenzten Kettenquerschnitt nahezu vollständig zu demontieren.

Darüber hinaus ist die Breite des Erweiterungsquerschnitts bei der zuvor beschriebenen Konstruktion durch den die Breite der Kette definierenden Abstand der Laschen zueinander fest vorgegeben. Hierdurch ist beispielsweise kein versetzter oder asymmetrischer Aufbau des Erweiterungsquerschnitts in bezug auf den von den Laschen definierten, ursprünglichen Kettenquerschnitt möglich.

Darüber hinaus erlaubt die Vorhaltung nur zwei verschiedener Arten von Teilen, nämlich Aufsatzstücken und Querstegen nur geringe Gestaltungsmöglichkeiten in bezug auf den Aufbau und die Aufteilung des Erweiterungsquerschnitts.

Der wohl schwerwiegenste Nachteil der bekannten Kette ist jedoch darin zu sehen, daß ein nachträgliches Öffnen der Kette zum Einlegen oder Herausnehmen von Kabeln erschwert ist.

Aus der US-PS 3,779,003 ist beispielsweise eine rohrförmige, nahezu vollständig geschlossene Energiezuführungskette bekannt, deren Glieder aus einer U-förmigen Basis und einer die Basis übergreifenden U-förmigen Abdeckung zusammengesetzt sind. Die U-förmigen Abdeckungen sind mit Rastzungen versehen, die die Seitenteile der das jeweilige Kettenglied bildenden Basis übergreifen und dort in entsprechende Rastausnehmungen einschnappen. Die in der US 3,779,003 beschriebenen Abdeckungen bilden eine geschlossene rohrförmige Energiezuführungskette derart, daß die Schwenkachsen der einzelnen Glieder unterhalb der Mittellängsebene des Kabelträgers angeordnet sind, um dessen Durchhängen in gewissen Grenzen zu ermöglichen. Hieraus ergibt sich ein asymmetrischer Aufbau des einzelnen Kettengliedes bzw. des Kettenquerschnitts in bezug auf die Schwenkachse der Glieder. Eine Erweiterung des Nutzquerschnitts dieser Kette ist hiermit nicht beabsichtigt. Der Nutzquerschnitt der dort beschriebenen Kette ist festgelegt, das Verhältnis der Höhe der Seitenteile der Kettenglieder zur Höhe der Abdeckungen ist durch die gewollte Durchbiegung der Kette festgelegt.

In der DE 37 30 586 C1 ist die Verwendung mehrteiliger Querstege für eine Energiezuführungskette beschrieben, wobei die Querstege einen Zentralabschnitt von einstellbarer Länge aufweisen, um die Breite des Aufnahmeraums für die Energieleiter der Dicke der aufgenommenen Energieleiter anpaßbar auszugestalten. Die Einstellbarkeit der Querstege wird durch Ablängen von Profilstücken der jeweiligen Querstege bewirkt. Eine Erweiterung des Nutzquerschnitts wird hierdurch nur in der Breite der Kette bewirkt, wobei eine solche Anpassung der Kette recht umständlich und ohne erhöhten Materialeinsatz kaum reversibel ist.

Aufgabe der Erfindung ist es daher, den Nutzquerschnitt der eingangs genannten Kette unter Beibehaltung der Konfiguration und Ausbildung der Laschen mit möglichst einfachen Mitteln zu erweitern, wobei auch der Vorzug des leichten Öffnens und Schließens der gattungsgemäßen Kette erhalten bleiben soll und wobei die vorstehend beschriebenen Nachteile im wesentlichen vermieden werden sollen.

Zur Lösung dieser Aufgabe ist nach der Erfindung vorgesehen, daß zumindest einige der Querstege als Bügel ausgebildet sind, die zumindest einseitig eine Erweiterung des durch die parallelen oberen und unteren Ränder der Laschen begrenzten Querschnitts bilden, und daß die Bügel mit sich in etwa parallel zu den oberen und unteren Schmalseiten der Laschen erstreckenden Befestigungsbereichen versehen sind, die zu den Rastvorsprüngen der Laschen korrespondierende Rastausnehmungen aufweisen.

Damit verläßt die Erfindung das Prinzip der Verwendung von Querstegen stets gleicher Ausbildung zugunsten einer wesentlich einfacheren Konstruktion. Die Verwendung von einer Querschnittserweiterung bildenden Bügeln erlaubt vor allen Dingen eine weitestgehende Gestaltungsfreiheit der Querschnittsform der Erweiterung, unabhängig von der durch den Laschenabstand vorgegebenen Breite der Energiezuführungskette.

Die Bügel gemäß der Erfindung können sowohl rund als auch eckig ausgebildet sein, diese sind einfacher zu montieren als paarweise auf gleicher Höhe der Laschen anzuordnende Aufsatzstücke, zwischen die weitere Querstege einsetzbar sind. Insbesondere können die Bügel gegebenenfalls mit in diesen vorgesehenen Innenaufteilungen aufklappbar ausgebildet sein.

Dadurch, daß die Bügel mit sich in etwa parallel zu den oberen und unteren Schmalseiten der Laschen erstreckenden Befestigungsbereichen versehen sind, die zu den Rastvorsprüngen der Laschen korrespondierende Rastausnehmungen aufweisen, ist gewährleistet, daß sich die Bügel auf einer oder beiden Seiten der Kette anstelle der sonst üblichen Querstege auf die Rastvorsprünge der Laschen aufschnappen lassen. Dabei sind die Befestigungsbereiche der Bügel zweckmäßigerweise entsprechend den Befestigungsbereichen herkömmlicher Querstege ausgebildet, so daß die Querstege einer Standardkette beliebig durch die Bügel gemäß der Erfindung austauschbar sind.

Bevorzugt sind die Bügel als einen rechteckigen Erweiterungsquerschnitt bildende Elemente ausgebildet. Dies erlaubt die Verwendung an sich bekannter Führungsrinnen mit in den Rinnen vorgesehenen Gleitschienen, in welchen die Energiezuführungsketten mit ihren durch die Bügel gebildeten Querschnittserweiterungen auf- und abrollbar sind. Da die Breite der den Erweiterungsquerschnitt bildenden Bügel unabhängig von der durch den Laschenabstand vorgegebenen Breite der Kette ist, kann eine verhältnismäßig breite Energiezuführungskette gemäß der Erfindung zusammen mit einer schmalen und flachen Führungsrinne verwendet werden.

Zweckmäßigerweise sind hierzu zumindest die äußeren Eckbereiche der Bügel mit Gleit- und/oder Führungsflächen verstärkt. Diese sorgen für einen geräusch- und verschleißarmen Lauf der Energiezuführungskette in einer Führungsrinne.

Bei einer bevorzugten Ausführungsform der Erfindung ist vorgesehen, daß die Bügel mehrteilig ausgebildet sind, so daß sie den Aufbau eines Erweiterungsquerschnitts als Modulsystem höherer Ordnung ermöglichen.

Ein modulartiger Aufbau des durch die Bügel gebildeten Erweiterungsquerschnitts ist insbesondere dann möglich, wenn die Bügel mittels als Paßstücke ausgebildeten Zwischenstücken in ihrer Breite und/oder Höhe veränderbar sind.

Die Paßstücke können zumindest teilweise die Konfiguration der Rastvorsprünge aufweisen, beispielsweise zur Höhenveränderbarkeit der Bügel können Paßstücke vorgesehen sein, die beiderseits Rastvorsprünge aufweisen, wobei dann die den Bügel bildenden Elemente ganz oder teilweise nach Art herkömmlicher Querstege ausgebildet sein können. Die Paßstücke können beispielsweise auch mit gegeneinander abgewinkelten Enden als Eckstücke oder als T-förmige Elemente mit drei Befestigungsbereichen oder auch als kreuzförmige Elemente mit vier Befestigungsbereichen ausgebildet sein.

Bei einer bevorzugten Ausführungsform der Erfindung weisen die Paßstücke zueinander komplementäre Rastmittel auf, so daß beispielsweise ein Standardbügel für verschiedene Kettenbreiten einsetzbar ist.

Bei einer weiteren vorteilhaften Ausführungsform der Erfindung ist vorgesehen, daß die einwärts gerichteten Rastvorsprünge jeweils einer Lasche eines Kettengliedes mit Lagerbohrungen versehen sind, die mit an den Bügeln oder an den Paßstücken vorgesehenen Lagerzapfen ein Scharnier bilden. Die Bügel lassen sich somit nach Öffnen einer Rastverbindung um das Scharnier aufschwenken, wodurch das Einlegen von Kabeln und/oder Leitungen in die Kette wesentlich erleichtert wird. Zweckmäßigerweise sind die Scharniere dabei so ausgebildet, daß sich die Lagerzapfen bei aufgeschwenkten Bügeln aus den Lagerbohrungen ausrasten lassen, so daß ein einfaches Abnehmen der Bügel gewährleistet ist.

Vorzugsweise sind die Bügel und/oder die Laschen mit zusätzlichen Befestigungsmitteln zur Aufnahme von Innenaufteilungselementen versehen.

Als Befestigungsmittel zur Aufnahme von Innenaufteilungselementen können beispielsweise Rastvorsprünge bildende, lösbar befestigbare Einsätze vorgesehen sein, die in entsprechende Ausnehmungen der Bügel und/oder der Laschen einsetzbar sind. Mit solchen Befestigungsmitteln lassen sich beispielsweise Querstege einfach als Kabel tragende Zwischenböden in die den Erweiterungsquerschnitt bildenden Bügel oder zwischen die Laschen der Energiezuführungskette einsetzen.

Wenn die Bügel durch Zwischenböden oder andere Kabel oder Schläuche tragende Innenaufteilungselemente stark belastet sind, kann es zweckmäßig sein, wenn diese mit Stützbeinen versehen sind, die sich jeweils auf den dem Bügel gegenüberliegenden Quersteg abstützen.

Alternativ können separate Stützstege vorgesehen sein, die die Bügel jeweils gegen den diesen gegenüberliegenden Quersteg oder gegenüberliegende Bügel eines Kettenglieds gegeneinander abstützen.

Die Rastvorsprünge können als an sich bekannte Rastleisten ausgebildet sein, die mit hierzu komplementären, an sich bekannten Rastausnehmungen zusammenwirken.

Nach einem alternativen Ausführungsbeispiel der Erfinding ist vorgesehen, daß die Bügel als einteilige, einen tunnelförmigen Erweiterungsquersschnitt bildende Bögen ausgebildet sind.

Die Erfindung betrifft weiterhin ein als Paßstück ausgebildetes Zwischenstück zur Verwendung mit einer Energiezuführungskette mit den vorstehend beschriebenen Merkmalen, daß im wesentlichen aus einem stegartigen Element mit beiderseitig vorgesehenen Rastmitteln besteht, die zueinander komplementär oder gleichartig ausgebildet sind.

Zweckmäßigerweise sind als Rastmittel beiderseits des stegartigen Elements Rastvorsprünge vorgesehen, wenn das Zwischenstück zur Höhenveränderbarkeit der Bügel Anwendung finden soll.

Bei einer Ausführungsform deer Erfindung ist vorgesehen, daß das Zwischenstück als Eckstück mit sich in etwa rechtwinklig zueinander erstreckenden Befestigungsbereichen ausgebildet ist.

Die Erfindung betrifft schließlich einen als Rastvorsprung ausgebildeter Einsatz zur Verwendung mit einer Energiezuführungskette mit den vorstehend beschriebenen Merkmalen bestehend aus einem als an sich bekannter Rastvorsprung ausgebildeten Grundkörper und einem einstückig mit diesem ausgebildeten Steckeinsatz zum Einsetzen in eine entsprechend konturierte Ausnehmung eines Bügels und/oder einer Lasche. Mit einem solchen Einsatz lassen sich beispielsweise Zwischenböden in der Energiezugührungskette an nahezu jeder beliebigen Stelle einsetzen, wobei als Zwischenböden herkömmliche Querstege Anwendung finden können.

Vorzugsweise ist der Steckeinsatz als Zapfen ausgebildet.

Die Erfindung wird nachstehend beispielsweise anhand von in den Zeichnungen dargestellten Ausführungsbeispielen erläutert.

Es zeigen:
- Fig. 1: ein Ausführungsbeispiel einer Energiezuführungskette gemäß der Erfindung mit oberhalb und unterhalb der Kette angeordneten Bügeln, die beiderseits der Kette eine Erweiterung des durch die oberen und unteren Ränder der Laschen begrenzten Kettenquerschnitts bilden,
- Fig. 2: eine Energiezuführungskette gemäß der Erfindung, die nur einseitig mit Bügeln versehen ist, wobei die Bügel sich zwischen Obertrum und Untertrum der Kette erstrecken,
- Fig. 3: eine Energiezuführungskette gemäß der Erfindung, die einseitig mit Erweiterungsbügeln bestückt ist, wobei die Bügel die Kette im abgewickelten Zustand tragen,
- Fig. 4: eine Seitenansicht eines Bügels, teilweise im Schnitt,
- Fig. 5: eine Draufsicht auf den in Fig. 4 dargestellten Bügel,
- Fig. 6: eine Unteransicht des in Fig. 4 dargestellten Bügels,
- Fig. 7: die Vorderansicht eines Kettenglieds einer Energiezuführungskette gemäß der Erfindung nach einem ersten Ausführungsbeispiel,
- Fig. 8: ein zweites Ausführungsbeispiel einer erfindungsgemäßen Energiezuführungskette,
- Fig. 9: die Energiezuführungskette aus Fig. 8 mit Innenaufteilung und Stützelementen,
- Fig. 10: die Energiezuführungskette aus Fig. 9 mit weiteren Innenaufteilungen,
- Fig. 11: eine weitere Variante der erfindungsgemäßen Energiezuführungskette,
- Fig. 12: eine Energiezuführungskette mit einem mit Stützbeinen versehenen Bügel,
- Fig. 13 und 14: zwei Varianten der Energiezuführungskette mit beiderseitig erweitertem Nutzquerschnitt,
- Fig. 15: eine Energiezuführungskette gemäß der Erfindung mit einem höhenveränderbaren Bügel,
- Fig. 16: eine schematische Ansicht, die den Ablauf der Energiezuführungskette in einer Führungsrinne veranschaulicht,
- Fig. 17: eine Seitenansicht eines Zwischenstücks gemäß der Erfindung,
- Fig. 18: die Ansicht des Zwischenstücks aus Fig. 17 von rechts in Fig. 17,
- Fig. 19: die Ansicht des Zwischenstücks aus Fig. 17 von links in Fig. 17,
- Fig. 20: eine Unteransicht des Zwischenstücks aus Fig. 17,
- Fig. 21: eine Draufsicht auf das in Fig. 17 gezeigte Zwischenstück,
- Fig. 22: eine Seitenansicht eines als Rastvorsprung ausgebildeten Einsatzes,
- Fig. 23: eine Seitenansicht des in Fig. 22 gezeigten Einsatzes von links und
- Fig. 24: eine Draufsicht auf den in Fig. 22 gezeigten Einsatz,
- Fig. 25: eine Vorderansicht eines Kettenglieds der Energiezuführungskette mit einem als einteiliger Bogen ausgebildeten Bügel,
- Fig. 26: eine Draufsicht auf das in Fig. 25 dargestellte Kettenglied,
- Fig. 27: eine Seitenansicht des in Fig. 26 dargestellten Kettenglieds,
- Fig. 28 bis 31: Ansichten verschiedener Konfigurationen von Paßstücken und
- Fig. 32: eine Variante einer Energiezuführungskette mit einseitig erweitertem Nutzquerschnitt unter Verwendung der in den Fig. 28 bis 31 dargestellten Paßstücke.

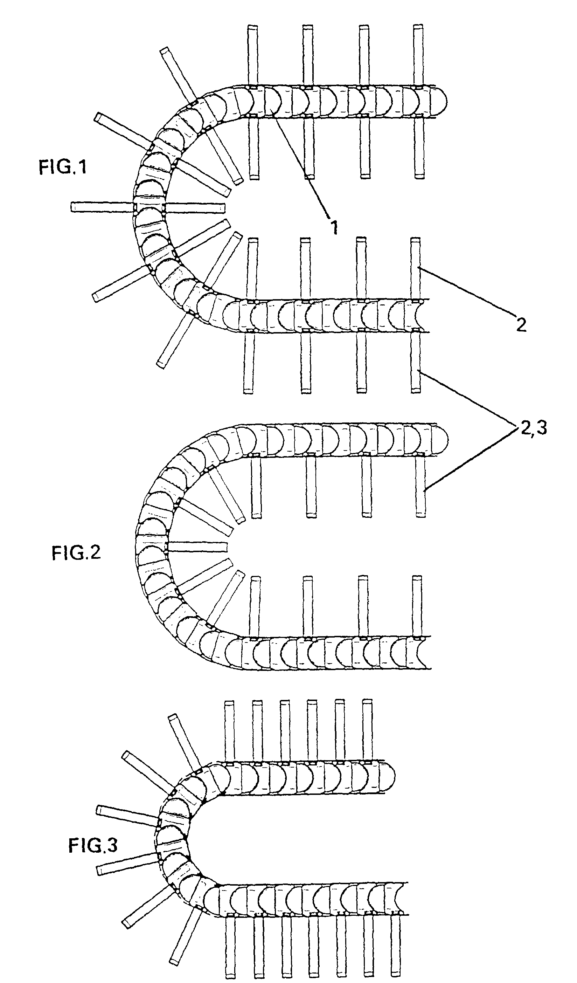

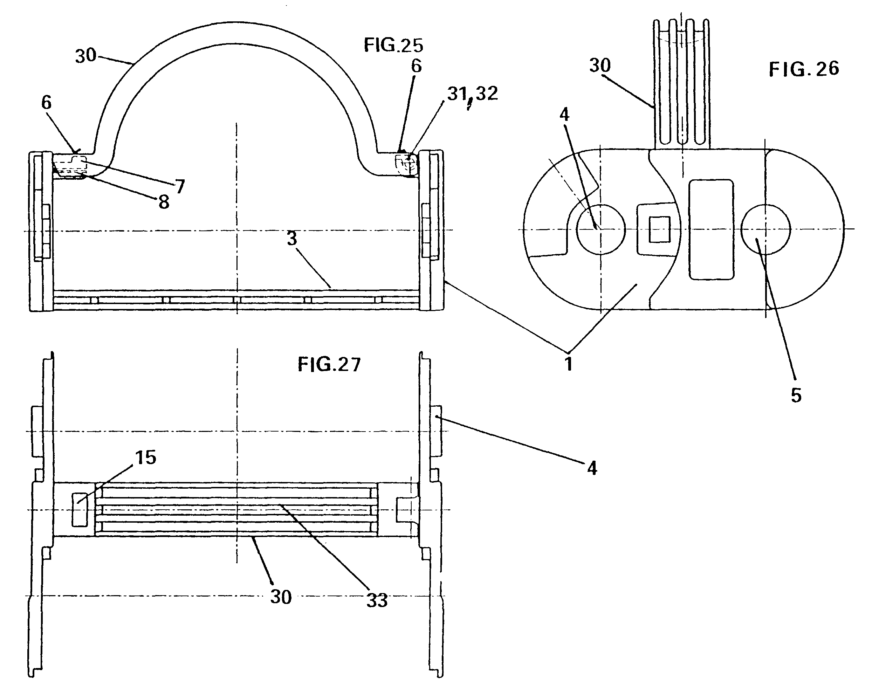

Wie insbesondere aus den Fig. 27 sowie 1 bis 3 ersichtlich ist, besteht die Energiezuführungskette gemäß der Erfindung aus Kettengliedern, die zu einem vorzugsweise in eine Richtung krümmbaren Kettenstrang zusammengefügt sind. Die Kettenglieder sind aus zueinander parallel ausgerichteten und spiegelbildlich zueinander ausgebildeten Laschen 1 und diese verbindenden oberen und unteren Querstegen 2, 3 gebildet. Sowohl die Laschen 1 als auch die oberen und unteren Querstege 2, 3 sind aus einem thermoplastischen Kunststoff gespritzt.

Die Laschen 1 sind auf einer Seite des Kettengliedes gegeneinander einwärts gekröpft und jeweils mit einem nach außen vorstehenden zylindrischen Zapfen 4 versehen. Die hiervon abliegenden Seiten der Laschen 1 sind gegeneinander auswärts gekröpft und jeweils mit einer entsprechend dem Zapfen 4 bemessenen Bohrung 5 versehen. Anstelle der Bohrung 5 kann auch auf den Innenseiten der Laschen in deren auswärts gekröpftem Bereich jeweils eine kreiszylindrische Vertiefung vorgesehen sein. Die zylindrischen Zapfen 4 auf den Außenseiten der gegeneinander einwärts gekröpften Laschenbereiche greifen in die Bohrungen 5 der auswärts gekröpften Laschenbereiche des benachbarten Kettengliedes ein, so daß eine Energiezuführungskette aus zwei zueinander parallelen und wenigstens in eine Richtung krümmbaren Laschensträngen gebildet wird.

Es ist für den Fachmann ersichtlich, daß die Laschen 1 nicht notwendigerweise gekröpft ausgebildet sein müssen. Einer der beiden Querstege 2, 3 kann einstückig mit den Laschen 1 ausgebildet sein, es können jedoch sowohl der obere Quersteg 2 als auch der untere Quersteg 3 lösbar mit den Laschen 1 verrastet sein.

Die die Laschen 1 verbindenden oberen und unteren Querstege 2, 3 bilden jeweils die obere und untere Begrenzung des von den Kettengliedern zur Aufnahme von Schläuchen, Kabeln oder dergleichen ausgebildeten Kanals.

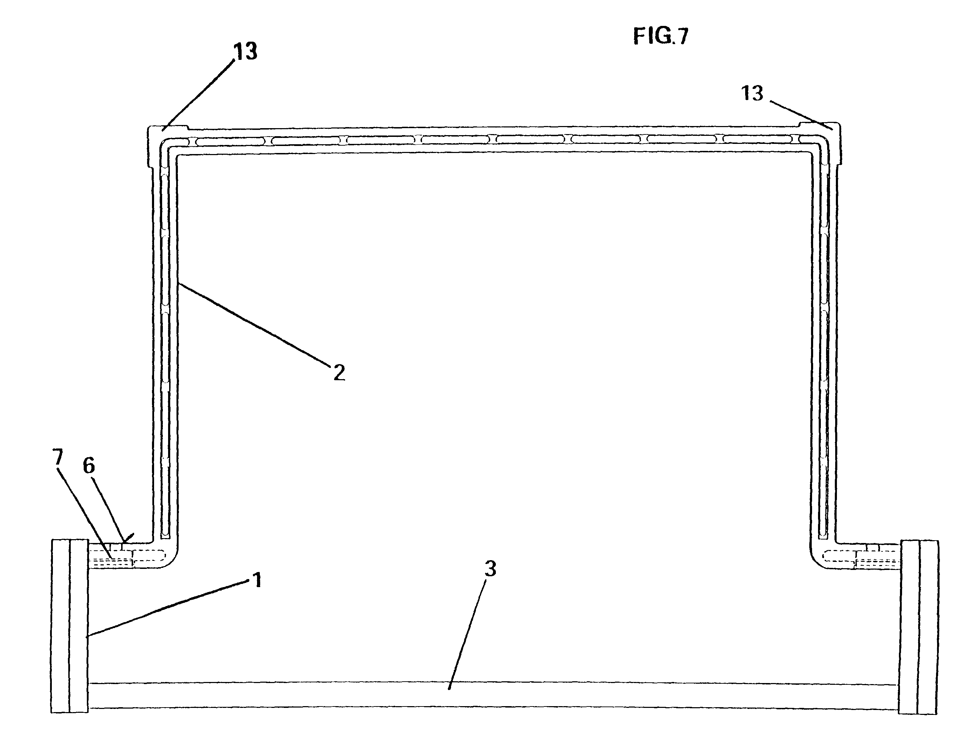

Fig. 7 zeigt ein erstes Ausführungsbeispiel der erfindungsgemäßen Kette, in welchem der obere Quersteg 2 als rechteckiger Bügel mit sich parallel zu dem unteren Quersteg 3 erstreckenden Befestigungsbereichen 6 ausgebildet ist. Sowohl der obere als auch der untere Quersteg 2, 3 sind lösbar auf an den Innenseiten der Laschen 1 vorgesehenen, einstückig angeformten Rastvorsprüngen 7 aufgeschnappt. Die Rastvorsprünge 7 sind durch die strichpunktierten Linien in Fig. 7 dargestellt, wobei nur die oberen Rastvorsprünge 7 sichtbar sind. Wie eingangs bereits erwähnt wurde, kann beispielsweise der untere Quersteg 3 auch einstückig mit den Laschen 1 ausgebildet sein.

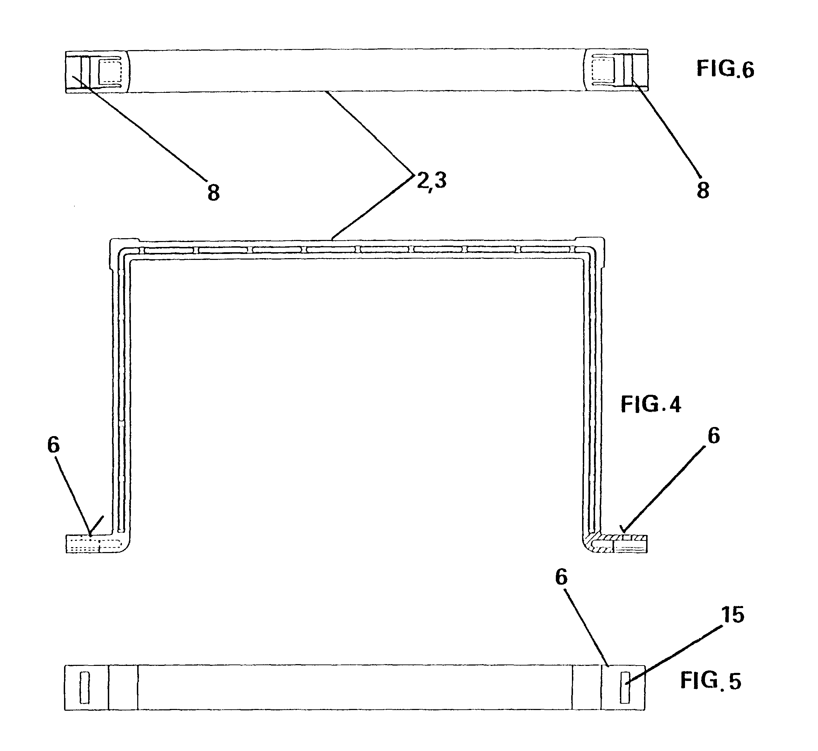

In den Fig. 4 bis 6 ist der als rechteckiger Bügel ausgebildete obere Quersteg 2 separat dargestellt. Die Befestigungsbereiche 6 des rechteckigen Bügels sind entsprechend den Befestigungsbereichen an und für sich bekannter Querstege ausgebildet, diese sind mit zu den Rastvorsprüngen 7 korrespondierenden Rastausnehmungen 8 versehen. Die einwärts gerichteten Rastvorsprünge 7 der Laschen 1 sind jeweils auf an sich bekannte Art und Weise als im Querschnitt trapezförmiger Ansatz mit beiderseits abgeschrägten Rastleisten bzw. hinterschnittenen Rastschrägen 9 ausgebildet, die mit in den Rastausnehmungen 8 vorgesehenen Rastnuten des betreffenden Querstegs 2, 3 zusammenwirken.

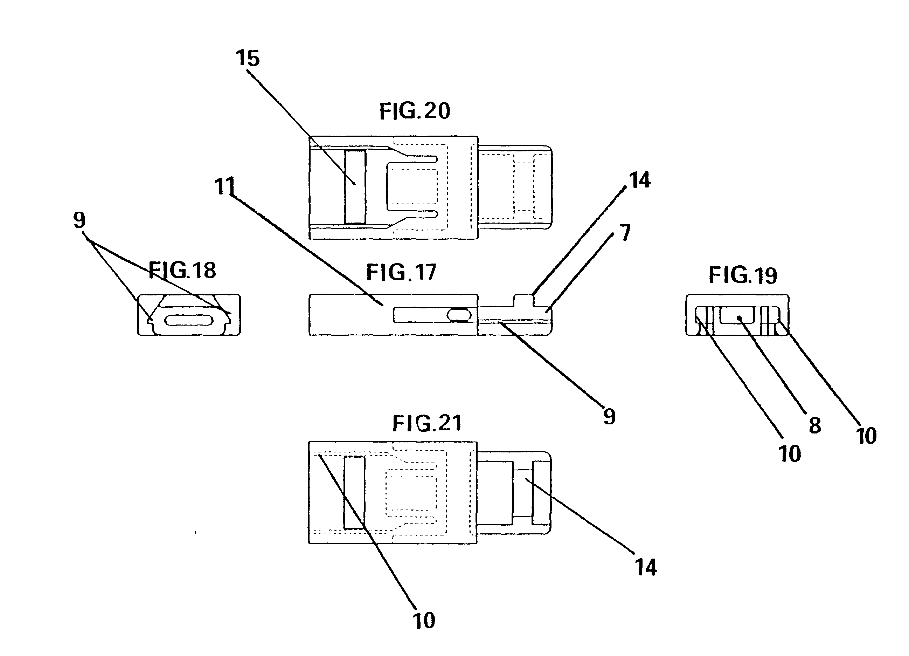

Die Ausbildung der Rastvorsprünge 7 und Rastausnehmungen 8 wird hier anhand des in den Fig. 17 bis 21 dargestellten Paßstücks 11 erläutert, auf welches später noch eingegangen wird und dessen Konfiguration derjenigen der Rastvorsprünge 7 sowie der in den Befestigungsbereichen 6 der Querstege 2, 3 vorgesehenen Rastausnehmungen 8 entspricht.

Aus den Figuren wird deutlich, daß der als rechteckiger Bügel ausgebildete obere Quersteg 2 eine obere Erweiterung des für Kabel, Schläuche oder dergleichen nutzbaren Kettenquerschnitts bildet. Dieser obere Quersteg 2 ist auf einfache Art und Weise montierbar bzw. verriegelbar und lösbar.

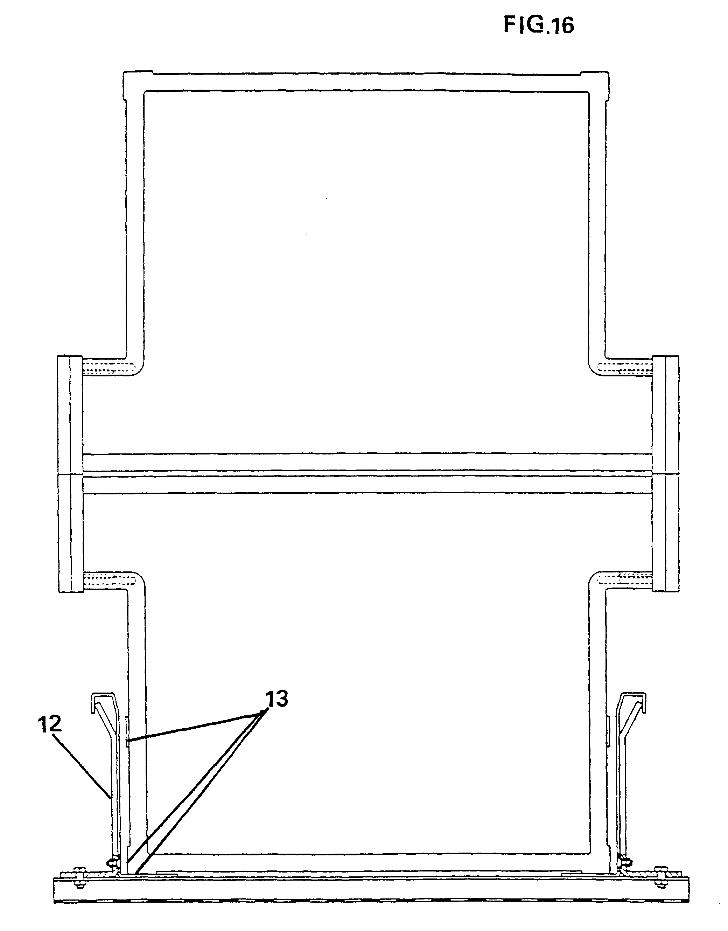

Die rechteckige Formgebung des Bügels erlaubt die Verwendung einer flachen, schmalen Führungsrinne 12 als Führung für die Energiezuführungskette, wie dies beispielsweise in Fig. 16 dargestellt ist. Um einen reibungs- und geräuscharmen Lauf der Energiezuführungskette in der Führungsrinne zu gewährleisten, sind die Eckbereiche der Bügel mit zusätzlichen Gleitflächen bzw. Führungsflächen 13 verstärkt. Wie Fig. 16 zu entnehmen ist, können auch die sich senkrecht erstreckenden Flanken der Bügel mit solchen Führungsflächen 13 verstärkt sein.

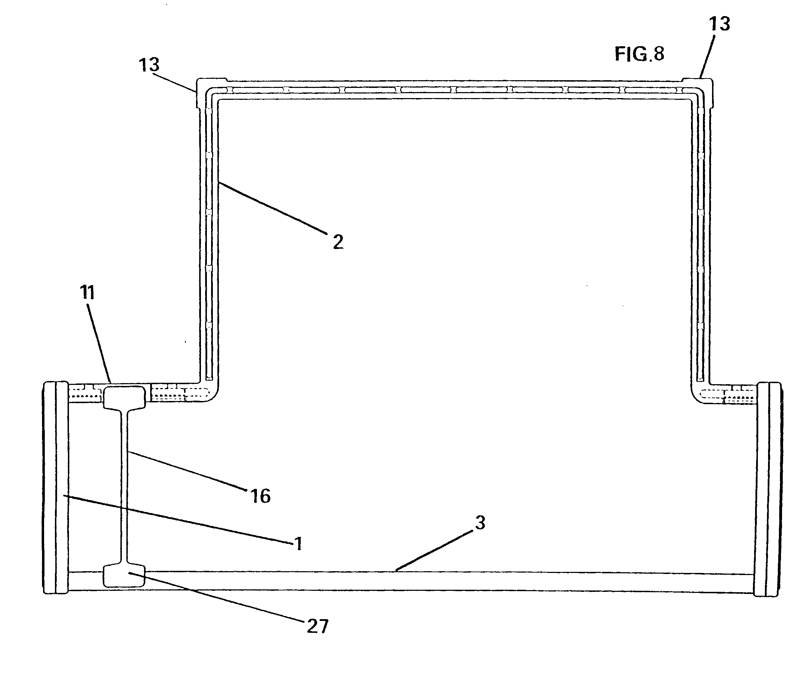

Fig. 8 zeigt ein Ausführungsbeispiel der erfindungsgemäßen Energiezuführungskette, bei welchem der Bügel mehrteilig ausgebildet ist, bzw. auf der in Fig. 8 links dargestellten Seite mit einem als Zwischenstück ausgebildeten Paßstück 11 verbreitert ist. Die Ausbildung des Paßstücks 11 ist in den Fig. 17 bis 21 dargestellt. Das Paßstück 11 ist auf der in den Fig. 17, 20 und 21 links dargestellten Seite mit einer Rastausnehmung versehen, die, wie vorstehend bereits erwähnt, den Rastausnehmungen 8 der Befestigungsbereiche 6 der oberen und unteren Querstege 2, 3 entspricht. Die rechte Seite des Paßstücks 11 ist als Rastvorsprung 7 ausgebildet, der in seiner Ausbildung den einwärts gerichteten Rastvorsprüngen 7 der Laschen 1 entspricht. Das Paßstück 7 wird als Verlängerung des Befestigungsbereichs 6 eines Bügels mit diesem und dem Rastvorsprung 7 einer Lasche 1 verrastet. Auf der Oberseite des Rastvorsprungs 7 der betreffenden Lasche 1 oder des Paßstücks 11 ist eine Nase 14 angeordnet, die in eine fensterartige Durchbrechung 15 in dem Befestigungsbereich 6 des Bügels oder der Rastausnehmung 8 des Paßstücks 11 eingreift. Die Rastverbindung zwischen dem betreffenden Rastvorsprung 7 und der Rastausnehmung 8 ist durch Ansetzen eines Schraubendrehers in der fensterartigen Durchbrechung 15 aufhebelbar.

Bei dem in Fig. 8 dargestellten Ausführungsbeispiel ist zur Aufteilung des Nutzquerschnitts der Energiezuführungskette ein an und für sich bekannter Trennsteg 16 vorgesehen, der zwischen das Paßstück 11 und den unteren Quersteg 3 eingesetzt ist.

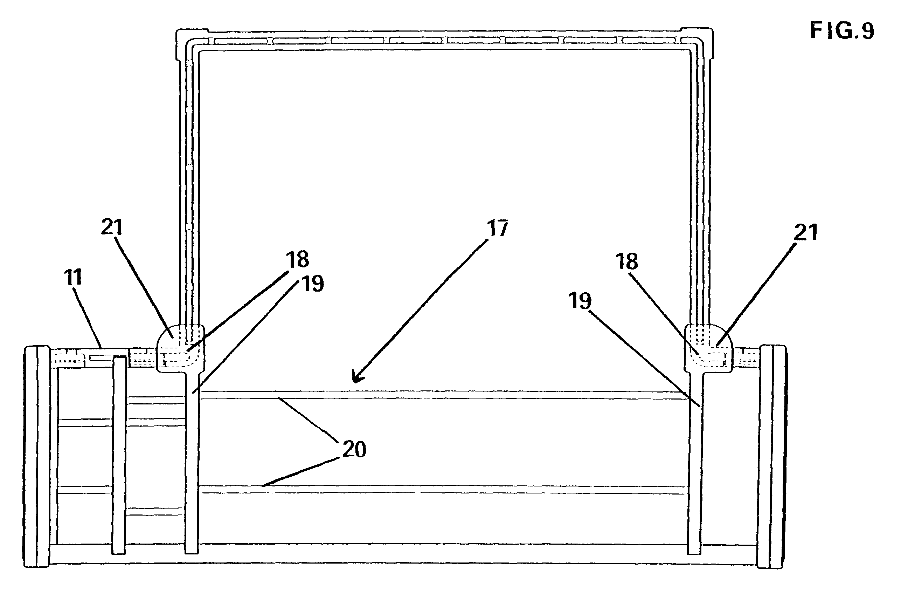

Fig. 9 zeigt ein weiteres Ausführungsbeispiel der erfindungsgemäßen Energiezuführungskette, bei welchem der Querschnitt des Kettengliedes mit zusätzlichen Innenaufteilungselementen 17 unterteilt ist. Die einwärts der Kette abgewinkelten unteren Ecken 18 des Bügels sind mittels separater Stützstege 19 gegen den unteren Quersteg 3 abgefangen. Die Stützstege 19 dienen dabei auch als Aufnahme für die Zwischenböden 20. An ihren dem Bügel zugewandten Enden sind die Stützstege 19 mit Tragwinkeln 21 versehen, die die unteren Ecken 18 der Bügel aufnehmen. Diese Tragwinkel 21 können mit zusätzlichen Rastmitteln versehen sein, so daß die unteren Ecken 18 der Bügel in diese einklipsbar sind.

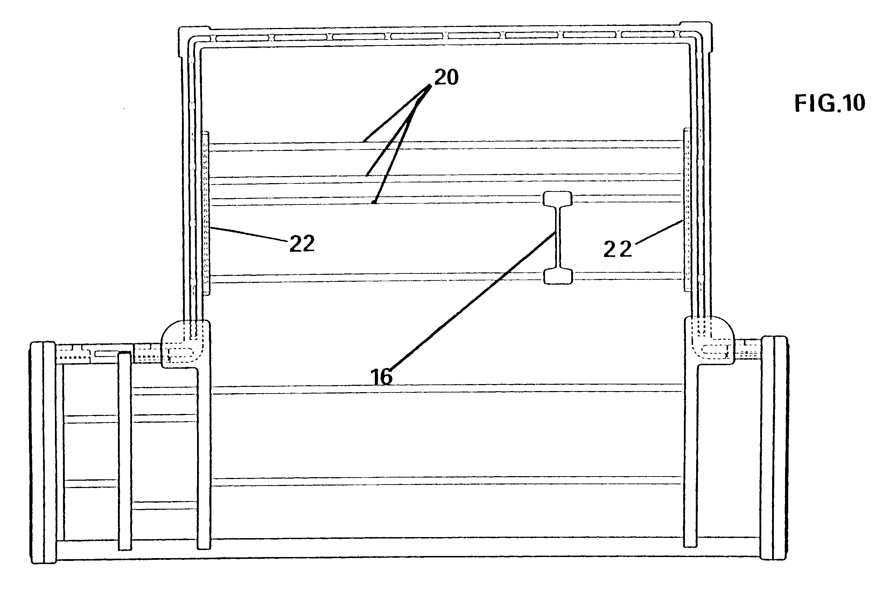

Die Fig. 10 zeigt die in Fig. 9 dargestellte Energiezuführungskette, wobei in dem durch den Bügel gebildeten Erweiterungsquerschnitt zusätzliche Zwischenböden 20 vorgesehen sind. Zur Befestigung der Zwischenböden 20 an der Innenseite des Bügels sind an dieser an und für sich bekannte Seitenplatten 22 befestigt. In die Seitenplatten 22 sind die Zwischenböden in der Höhe variabel einschiebbar. Zur weiteren Aufteilung des Erweiterungsquerschnitts können zwischen den Zwischenböden Trennstege 16 eingebracht werden.

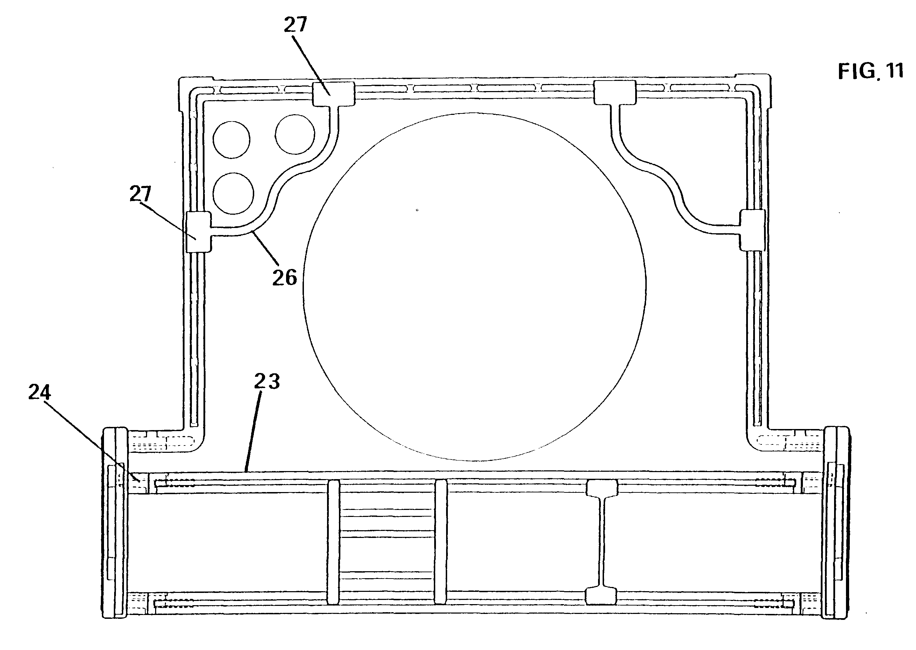

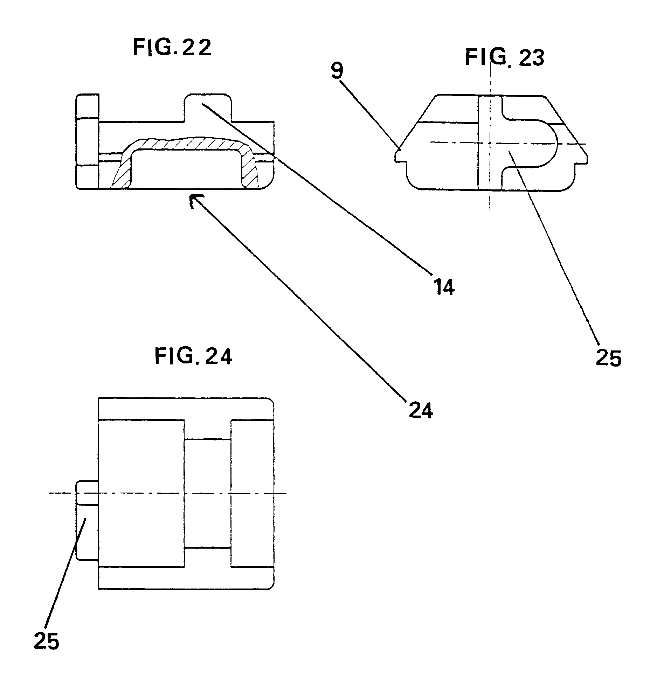

Fig. 11 zeigt eine weitere Variante der Energiezuführungskette gemäß der Erfindung, bei welcher zwischen den Laschen 1 jeweils ein Zwischensteg 23 eingesetzt ist. Der Zwischensteg 23 ist nach Art eines herkömmlichen Querstegs ausgebildet, wobei zur Aufnahme des Zwischenstegs 23 an den Innenseiten der Laschen zusätzliche Rastvorsprünge vorgesehen sind. Diese Rastvorsprünge sind als lösbar befestigbare Einsätze 24 ausgebildet, ein solcher Einsatz ist in den Fig. 22 bis 24 dargestellt. Der dort gezeigte Einsatz ist nach Art eines Rastvorsprungs 7 ausgebildet, wobei dieser mit einem in etwa T-förmigen Zapfen 25 versehen ist, der in nicht dargestellte Ausnehmungen der Laschen 1 oder der Bügel einsteckbar ist.

Zur optimalen Nutzung des Erweiterungsquerschnitts sind bei dem in Fig. 11 dargestellten Ausführungsbeispiel zusätzliche Eckaufteilungen 26 vorgesehen, mit welchen kleinere Kabel oder Schläuche in den Ecken der Bügel festlegbar sind. Die Eckaufteilungen 26 sind ebenso wie die Trennstege 16 mit gabelförmigen Klemmelementen 27 versehen, mit welchen diese an die Bügel anklipsbar sind.

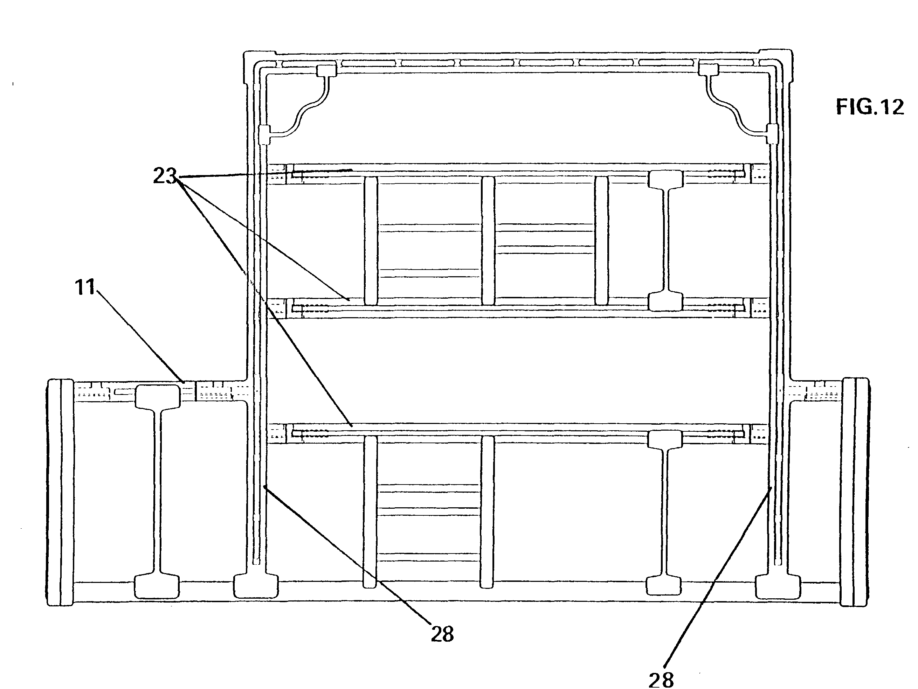

Bei dem in Fig. 12 dargestellten Ausführungsbeispiel sind mittels der zuvor beschriebenen Einsätze 24 Zwischenstege 23 in dem durch die Bügel gebildeten Erweiterungsquerschnitt vorgesehen. Da die Bügel durch die eingesetzten Zwischenstege 23 und auf diesen aufliegende Kabel und/oder Schläuche naturgemäß hoch belastet sind, sind diese mit Stützbeinen 28 gegen den unteren Quersteg 3 abgestützt. Die Stützbeine sind an ihren unteren Enden entsprechend den Trennstegen 16 ausgebildet.

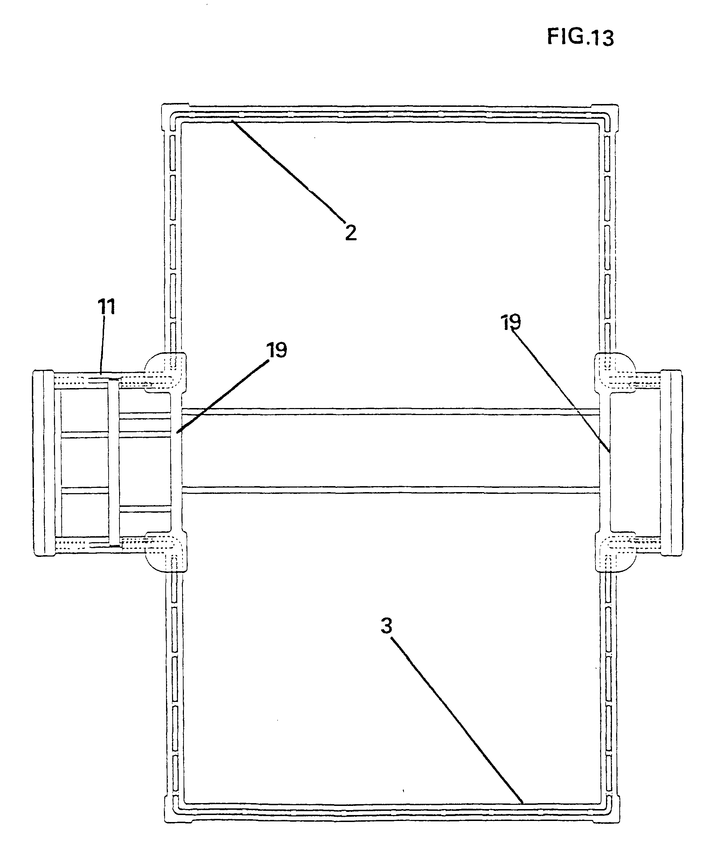

Fig. 13 zeigt ein Ausführungsbeispiel der Energiezuführungskette, bei welchem anstelle des gewöhnlich ausgebildeten unteren Querstegs 3 ebenso ein als Bügel ausgebildeter Quersteg vorgesehen ist. Hierdurch ist der Nutzquerschnitt der Energiezuführungskette sowohl nach oben als auch nach unten erweitert. Die ketteneinwärts gerichteten Ecken 18 der sich gegenüberliegenden Bügel sind gegeneinander mittels der zuvor beschriebenen Stützstege 19 abgestützt.

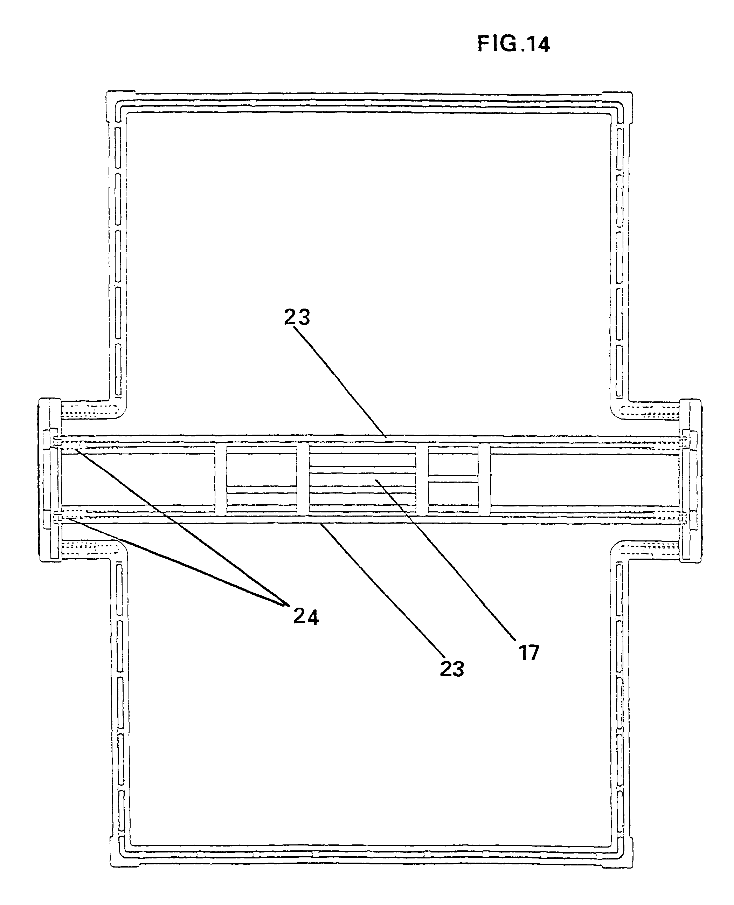

Bei dem in Fig. 14 dargestellten Ausführungsbeispiel ist ebenfalls der Nutzquerschnitt der Energiezuführungskette an beiden Seiten der Laschen mittels rechteckiger Bügel erweitert, zusätzlich sind die Laschen durch Zwischenstege 23 mit weiteren Innenaufteilungen verbunden.

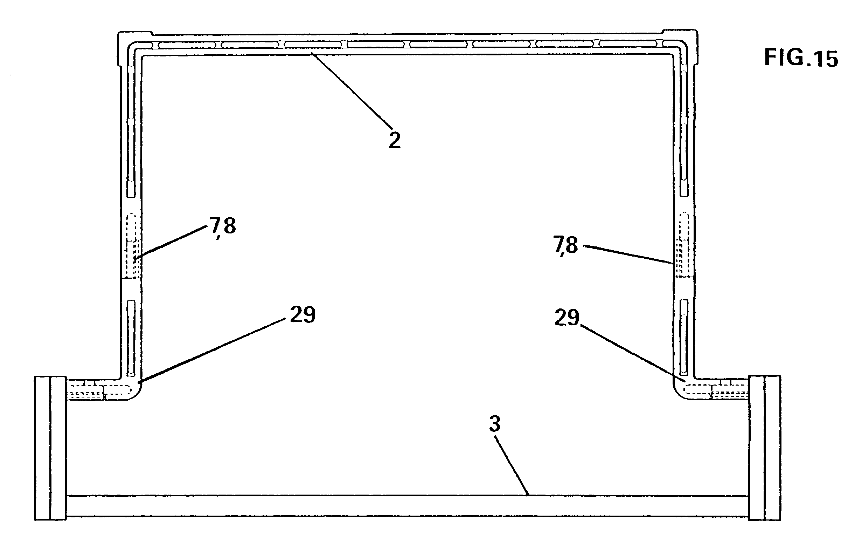

Fig. 15 zeigt eine Energiezuführungskette mit einem in der Höhe veränderbaren mehrteiligen Bügel, der mit den lösbar befestigbaren Eckstücken 29 versehen ist. Die Eckstücke 29 sind nach Art des in den Fig. 17 bis 21 dargestellten Paßstücks 11 ausgebildet. Die sich in etwa parallel zu den oberen Schmalseiten der Laschen 1 erstreckenden Befestigungsbereiche 6 der Eckstücke 29 sind als Rastausnehmungen 8 ausgebildet, deren sich senkrecht nach oben erstreckenden Enden sind als Rastvorsprünge 7 ausgebildet. Die Höhe des in Fig. 15 dargestellten Bügels ist ohne weiteres mittels mehrerer gerader Paßstücke 11 oder verschieden dimensionierter Eckstücke 29 variierbar.

Mit den Paßstücken 11, Einsätzen 24 sowie Eckstücken 29 sowie den eckigen Bügeln ist der Nutzquerschnitt der erfindungsgemäßen Energiezuführungskette nach Art eines Modulsystems höherer Ordnung beliebig erweiterbar.

Sowohl die Paßstücke 11, als auch die Bügel können beispielsweise mit Scharnieren versehen sein, die ein einfaches Öffnen der Energiezuführungskette im Sinne von Aufklappen ermöglichen.

In den Fig. 25 bis 27 ist ein Ausführungsbeispiel der Erfindung dargestellt, bei welchem die den jeweils oberen Quersteg 2 bildenden Bügel als einteilige Bögen 30 ausgebildet sind. Diese Bögen 30 ermöglichen eine besonders einfache und stabile Variante der erfindungsgemäßen Energiezuführungskette.

Wie der Fig. 25 zu entnehmen ist, ist dort der Bügel auf der rechten Seite über Lagerzapfen 31 schwenkbar in Lagerbohrungen 32 des betreffenden Rastvorsprungs gelagert. Die Lagerzapfen 31 lassen sich in der aufgeschwenkten Stellung des Bügels einfach aus den Lagerbohrungen 32 ausrasten.

Aus Stabilitätsgründen sind die Bögen 30 mit sich in Umfangsrichtung erstreckenden Verstärkungsrippen 33 versehen.

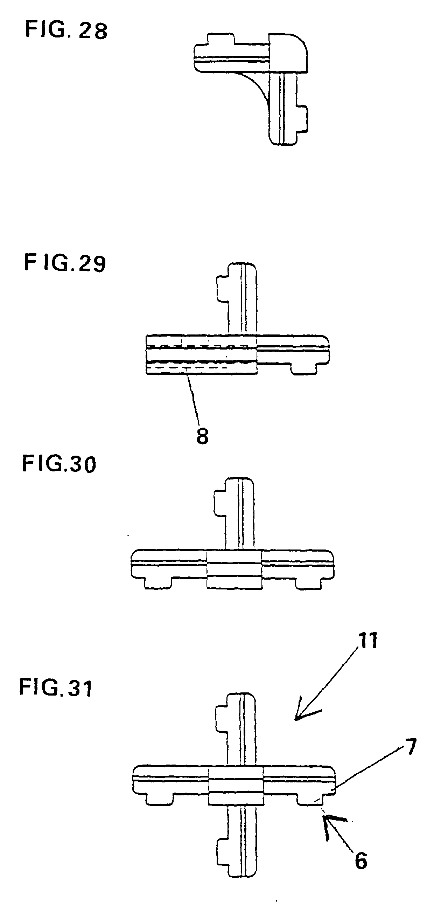

Die Fig. 28 bis 31 zeigen verschiedene Varianten von Paßstücken 11, wobei Fig. 28 beispielsweise ein Eckstück 29 darstellt, dessen Befestigungsbereiche 6 beide als Rastvorsprünge 7 nach Art der Rastvorsprünge 7 der Kettenlaschen 1 ausgebildet sind.

In Fig. 29 ist ein Paßstück 11 dargestellt, das in etwa T-förmig ausgebildet ist, wobei zwei Befestigungsbereiche 6 mit Rastvorsprüngen 7 und ein Befestigungsbereich mit Rastausnehmungen 8 versehen ist. Das in Fig. 30 dargestellte Paßstück 11 ist ebenfalls T-förmig ausgebildet, wobei alle drei Befestigungsbereiche 6 mit Rastvorsprüngen 7 versehen sind. Schließlich ist in Fig. 31 ein kreuzförmiges bzw. sternförmiges Paßstück 11 dargestellt, welches mit vier gleich ausgebildeten Befestigungsbereichen 6 als Rastvorsprünge 7 versehen ist.

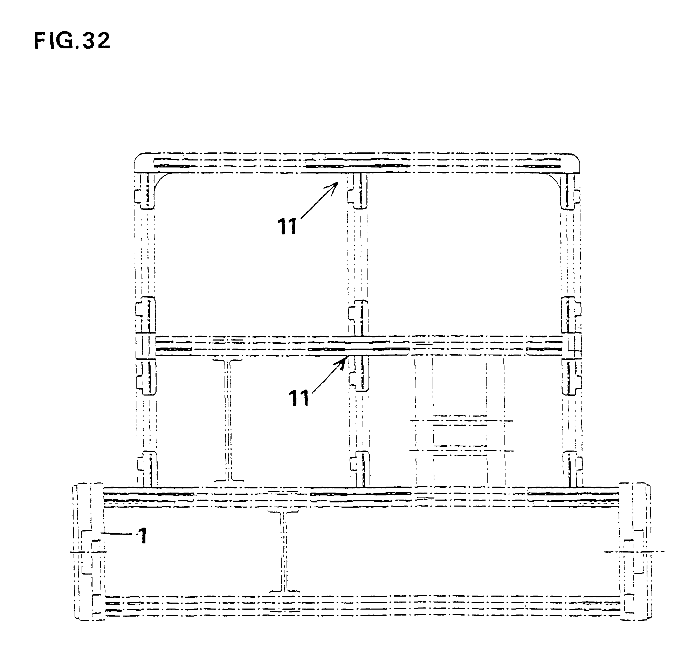

In Fig. 32 sind die Einsatzmöglichkeiten der in den Fig. 28 bis 31 dargestellten Paßstücke 11 veranschaulicht.

### Bezugszeichenliste

- 1: Laschen
- 2: obere Querstege
- 3: untere Querstege
- 4: Zapfen
- 5: Bohrung
- 6: Befestigungsbereiche
- 7: Rastvorsprünge
- 8: Rastausnehmungen
- 9: Rastschrägen
- 10: Rastnuten
- 11: Paßstück
- 12: Führungsrinne
- 13: Führungsflächen
- 14: Nase
- 15: Durchbrechung
- 16: Trennsteg
- 17: Innenauf teilungselemente
- 18: Ecken der Bügel
- 19: Stützstege
- 20: Zwischenböden
- 21: Tragwinkel
- 22: Seitenplatten
- 23: Zwischensteg
- 24: Einsätze
- 25: Zapfen
- 26: Eckaufteilungen
- 27: Klemmelemente
- 28: Stützbeine
- 29: Eckstücke
- 30: Bögen
- 31: Lagerzapfen
- 32: Lagerbohrungen
- 33: Verstärkungsrippen

## Patentansprüche

1. Energiezuführungskette zur Aufnahme von Kabeln, Schläuchen oder dergleichen mit einer Anzahl gelenkig miteinander verbundener Kettenglieder, die durch zueinander parallele Laschen (1) und diese verbindende Querstege (2, 3) gebildet werden, wobei die Laschen (1) seitliche, ketteneinwärts gerichtete Rastvorsprünge (7) zur lösbar rastenden Aufnahme entsprechend ausgebildeter Querstege (2, 3) oder Zwischenstücke aufweisen, **dadurch gekennzeichnet, daß** zumindest einige der Querstege (2, 3) als Bügel ausgebildet sind, die zumindest einseitig eine Erweiterung des durch die parallelen oberen und unteren Ränder der Laschen (1) begrenzten Kettenquerschnitts bilden, und daß die Bügel mit sich in etwa parallel zu den oberen und unteren Schmalseiten der Laschen erstreckenden Befestigungsbereichen (6) versehen sind, die zu den Rastvorsprüngen (7) der Laschen korrespondierende Rastausnehmungen (8) aufweisen.

2. Energiezuführungskette nach Anspruch 1, **dadurch gekennzeichnet, daß** die Bügel als einen rechteckigen Erweiterungsquerschnitt bildende Elemente ausgebildet sind.

3. Energiezuführungskette nach Anspruch 1 oder 2, **dadurch gekennzeichnet, daß** zumindest die äußeren Eckbereiche der Bügel mit Gleit- und/oder Führungsflächen (13) verstärkt sind.

4. Energiezuführungskette nach einem der Ansprüche 1 bis 3, **dadurch gekennzeichnet, daß** die Bügel mehrteilig ausgebildet sind.

5. Energiezuführungskette nach einem der Ansprüche 1 bis 4, **dadurch gekennzeichnet, daß** die Bügel mittels als Paßstücke (11) ausgebildeten Zwischenstücken in ihrer Breite und/oder Höhe veränderbar sind.

6. Energiezuführungskette nach einem der Ansprüche 1 bis 5, **dadurch gekennzeichnet, daß** die Paßstücke (11) zumindest teilweise die Konfiguration der Rastvorsprünge (7) aufweisen.

7. Energiezuführungskette nach einem der Ansprüche 1 bis 6, **dadurch gekennzeichnet, daß** die Paßstücke (11) zueinander komplementäre Rastmittel aufweisen.

8. Energiezuführungskette nach einem der Ansprüche 1 bis 7, **dadurch gekennzeichnet, daß** die einwärts gerichteten Rastvorsprünge (7) jeweils einer Lasche (1) eines Kettenglieds mit Lagerbohrungen (32) versehen sind, die mit an den Bügeln oder an den Paßstücken (11) vorgesehenen Lagerzapfen (31) ein Scharnier bilden.

9. Energiezuführungskette nach einem der Ansprüche 1 bis 8, **dadurch gekennzeichnet, daß** die Bügel und/oder die Laschen (1) mit zusätzlichen Befestigungsmitteln zur Aufnahme von Innenaufteilungselementen (17, 23) versehen sind.

10. Energiezuführungskette nach einem der Ansprüche 1 bis 9, **dadurch gekennzeichnet, daß** als Befestigungsmittel zur Aufnahme von Innenaufteilungselementen (17, 23) Rastvorsprünge (7) bildende, lösbar befestigbare Einsätze (24) vorgesehen sind, die in entsprechende Ausnehmungen der Bügel und/oder der Laschen (1) einsetzbar sind.

11. Energiezuführungskette nach einem der Ansprüche 1 bis 10, **dadurch gekennzeichnet, daß** die Bügel mit Stützbeinen (28) versehen sind, die sich jeweils auf dem dem Bügel gegenüberliegenden Quersteg (3) abstützen.

12. Energiezuführungskette nach einem der Ansprüche 1 bis 11, **dadurch gekennzeichnet, daß** separate Sütztstege (19) vorgesehen sind, die die Bügel jeweils gegen den diesen gegenüberliegenden Quersteg (3) oder gegenüberliegende Bügel eines Kettenglieds gegeneinander abstützen.

13. Energiezuführungskette nach einem der Ansprüche 1 bis 12, **dadurch gekennzeichnet, daß** die Rastvorsprünge (7) als an sich bekannte Rastleisten ausgebildet sind, die mit hierzu komplementären, an sich bekannten Rastausnehmungen (8) zusammenwirken.

14. Energiezuführungskette nach Anspruch 1, **dadurch gekennzeichnet, daß** die Bügel als einteilige, einen tunnelförmigen Erweiterungsquerschnitt bildende Bögen (30) ausgebildet sind.

15. Als Paßstück ausgebildetes Zwischenstück zur Verwendung mit einer Energiezuführungskette mit den Merkmalen eines der Ansprüche 1 bis 14, im wesentlichen bestehend aus wenigstens einem stegartigen Element mit an wenigstens zwei Seiten vorgesehenen Rastmitteln, die zueinander komplementär oder gleichartig ausgebildet sind und die Konfiguration der Rastmittel eines Querstegs oder einer der Laschen einer Energiezuführungskette aufweisen.

16. Zwischenstück nach Anspruch 15, **dadurch gekennzeichnet, daß** als Rastmittel Rastvorsprünge (7) und/oder hierzu komplementäre Rastausnehmungen (8) mit Rastnuten (10) vorgesehen sind.

17. Zwischenstück nach einem der Ansprüche 15 oder 16, **dadurch gekennzeichnet, daß** es als Eckstück mit sich in etwa rechtwinklig zueinander erstreckenden Befestigungsbereichen (6) ausgebildet ist.

18. Zwischenstück nach einem der Ansprüche 15 oder 16, **dadurch gekennzeichnet, daß** es als T-förmiges Element mit drei Befestigungsbereichen (6) ausgebildet ist.

19. Zwischenstück nach einem der Ansprüche 15 oder 16, **dadurch gekennzeichnet, daß** es als kreuzförmiges Element mit vier Befestigungsbereichen (6) ausgebildet ist.

20. Als Rastvorsprung ausgebildeter Einsatz (24) zur Verwendung mit einer Energiezuführungskette mit den Merkmalen eines der Ansprüche 1 bis 14, bestehend aus einem als an sich bekannter Rastvorsprung (7) ausgebildeten Grundkörper und einem einstückig mit diesem ausgebildeten Steckeinsatz zum Einsetzen in eine entsprechend konturierte Ausnehmung eines Bügels und/oder einer Lasche (1).

21. Einsatz nach Anspruch 20, **dadurch gekennzeichnet, daß** der Steckeinsatz als Zapfen (25) ausgebildet ist.

## Claims

1. Energy chain for accommodating cables, hoses and the like, having a number of chain links connected to one another in articulated fashion which are formed by parallel straps (1) connected by cross-members (2,3), where the straps (1) have lateral locking projections (7) facing the inside of the chain for the detachable, snap-in accommodation of correspondingly designed cross-members (2, 3) or connectors, **characterised in that** at least some of the cross-members (2,3) are designed as brackets, where at least one side of the bracket forms an extension of the chain cross-section bounded by the parallel upper and lower edges of the straps (1), and that the brackets are provided with mounting surfaces (6) extending roughly parallel to the upper and lower narrow sides of the straps and having recesses (8) corresponding to the locking projections (7) of the straps.

2. Energy guiding chain according to claim 1, **characterised in that** the brackets are designed as elements forming a rectangular expanded cross-section.

3. Energy guiding chain according to claim 1 or 2, **characterised in that** at least the outer corners of the brackets are reinforced with slide and/or guide surfaces (13).

4. Energy guiding chain according to one of the claims 1 to 3 **characterised in that** at the brackets are multi-part design.

5. Energy guiding chain according to one of the claims 1 to 4, **characterised in that** the width, and/or height of the brackets can be varied using intermediate elements designed as adapters (11).

6. Energy guiding chain according to one of the claims 1 to 5, **characterised in that** the adapters (11) at least partially resemble the configuration of the locking projections (7).

7. Energy guiding chain according to one the claims 1 to 6, **characterised in that** the adapters (11) have complementary snap-fitting elements.

8. Energy guiding chain according to one of the claims 1 to 7, **characterised in that** the inward-pointing locking projections (7) of one strap (1) of a chain link are provided with bearing bores (32) which form a hinge with the bearing journals (31) provided on the brackets or adapters (11).

9. Energy guiding chain according to one of the claims 1 to 8, **characterised in that** at the brackets and/or straps (1) are provided with additional fastening elements in order to accommodate interior partitions (17, 23).

10. Energy guiding chain according to one of the claims 1 to 9, **characterised in that**, in order to accommodate interior partitions (17, 23), detachably mounted inserts (24), which form locking projections (7), are provided as fastening elements which can be inserted into corresponding recesses of the brackets and/or straps (1).

11. Energy guiding chain according to one of the claims 1 to 10, **characterised in that** the brackets are provided with support legs (29) resting respectively on the cross-member (3) opposite the bracket.

12. Energy guiding chain according to one of the claims 1 to 11, **characterised in that** separate support members (19) are provided which either support the brackets against the respective opposite cross-member (3) or support opposite brackets.

13. Energy guiding chain according to one of the claims 1 to 12, **characterised in that** the locking projections (7) are designed as the known snap ridges which interact with the known complementary recesses (8).

14. Energy guiding chain according to claim 1, **characterised in that** the brackets are designed as one-piece arches (30) which form a tunnel-shaped expanded cross-section.

15. Intermediate element designed as an adapter for use with an energy guiding chain with the characteristics of one of the claims 1 to 14, essentially consisting of at least one weblike element provided on at least two sides with snap-fitting elements designed to be either complementary or identical and configured like the snap-fitting elements of a cross-member or one of the straps of an energy guiding chain.

16. Intermediate element according to claim 15, **characterised in that** locking projections (7) and/or complementary recesses (8) with snap grooves (10) are provided as snap-fitting elements.

17. Intermediate element according to one of the claims 15 or 16, **characterised in that** it is designed as a corner piece with mounting surfaces (6) extending at roughly right angles to one another.

18. Intermediate element according to one of the claims 15 or 1 6, **characterised in that** it is designed as a T-shaped element with three mounting surfaces (6).

19. Intermediate element according to one the claims 15 or 16, **characterised in that** it is designed as a cross-shaped element with four mounting surfaces (6).

20. Insert (24) designed as a locking projection for use with an energy guiding chain with the characteristics of one of the claims 1 to 14, consisting of a basic element designed as a known locking projection (7) and an integrated snap-in insert for insertion into a correspondingly shaped recess of a brackets and/or strap (1).

21. Insert according to claim 20, **characterised in that** the snap-in insert is designed as a pin (25).

## Revendications

1. Chaîne d'alimentation en énergie pour recevoir des câbles, des tuyaux ou similaires, comportant un certain nombre de maillons de chaîne reliés en articulation les uns aux autres qui sont formés par des pattes (1) parallèles les unes aux autres et par des traverses (2, 3) reliant celles-ci, dans laquelle les pattes (1) comprennent des saillies d'enclenchement (7) latérales dirigées vers l'intérieur de la chaîne pour la réception par enclenchement détachable de traverses (2, 3) ou de pièces intermédiaires réalisées en correspondance, **caractérisée en ce que** quelques-unes au moins des traverses (2, 3) sont réalisées en forme d'anses qui forment du moins unilatéralement un élargissement de la section de chaîne limitée par les bords supérieur et inférieur parallèles des pattes (1), et **en ce que** les anses sont pourvues de zones de fixation (6) qui s'étendent approximativement parallèlement aux petits côtés supérieur et inférieur des pattes et qui comprennent des évidements d'enclenchement (8) correspondant aux saillies d'enclenchement (7) des pattes.

2. Chaîne d'alimentation en énergie selon la revendication 1, **caractérisée en ce que** les anses sont réalisées sous forme d'éléments formant une section élargie rectangulaire.

3. Chaîne d'alimentation en énergie selon l'une ou l'autre des revendications 1 et 2, **caractérisée en ce que** les zones de coin extérieures au moins des anses sont renforcées par des surfaces de coulissement et/ou de guidage (13).

4. Chaîne d'alimentation en énergie selon l'une quelconque des revendications 1 à 3, **caractérisée en ce que** les anses sont réalisées en plusieurs pièces.

5. Chaîne d'alimentation en énergie selon l'une quelconque des revendications 1 à 4, **caractérisée en ce que** les anses sont variables quant à leur largeur et/ou leur hauteur au moyen de pièces intermédiaires réalisées sous forme de clavettes (11).

6. Chaîne d'alimentation en énergie selon l'une quelconque des revendications 1 à 5, **caractérisée en ce que** les clavettes (11) comportent du moins en partie la configuration des saillies d'enclenchement (7).

7. Chaîne d'alimentation en énergie selon l'une quelconque des revendications 1 à 6, **caractérisée en ce que** les clavettes (11) comprennent des moyens d'enclenchement mutuellement complémentaires.

8. Chaîne d'alimentation en énergie selon l'une quelconque des revendications 1 à 7, **caractérisée en ce que** les saillies d'enclenchement (7) dirigées vers l'intérieur d'une patte respective (1) d'un maillon de chaîne sont pourvues de perçages de montage (32) qui forment une charnière conjointement avec les tenons de montage (31) prévus sur les anses ou sur les clavettes (11).

9. Chaîne d'alimentation en énergie selon l'une quelconque des revendications 1 à 8, **caractérisée en ce que** les anses et/ou les pattes (1) sont pourvues de moyens de fixation supplémentaires pour recevoir des éléments de subdivision internes (17, 23).

10. Chaîne d'alimentation en énergie selon l'une quelconque des revendications 1 à 9, **caractérisée en ce qu'**à titre de moyens de fixation pour recevoir des éléments de subdivision interne (17, 23) sont prévus des inserts (24) formant les saillies d'enclenchement (7) et susceptibles d'être fixés de façon détachable, qui peuvent être mis en place dans des évidements correspondants des anses et/ou des pattes (1).

11. Chaîne d'alimentation en énergie selon l'une quelconque des revendications 1 à 10, **caractérisée en ce que** les anses sont pourvues de jambes d'appui (28) qui s'appuient chacune sur la traverse (3) opposée à l'anse.

12. Chaîne d'alimentation en énergie selon l'une quelconque des revendications 1 à 11, **caractérisée en ce qu'**il est prévu des barrettes d'appui séparées (19) qui soutiennent chaque anse contre la traverse (3) qui lui est opposée, ou qui soutiennent les anses opposées d'un maillon de chaîne l'une contre l'autre.

13. Chaîne d'alimentation en énergie selon l'une quelconque des revendications 1 à 12, **caractérisée en ce que** les saillies d'enclenchement (7) sont réalisées sous forme de baguettes d'enclenchement connues en soi qui coopèrent avec des évidements d'enclenchement (8) complémentaires et connus en soi.

14. Chaîne d'alimentation en énergie selon la revendication 1, **caractérisée en ce que** les anses sont réalisées sous forme d'arcs (30) d'une seule pièce formant une section élargie en forme de tunnel.

15. Pièce intermédiaire réalisée sous forme de clavette pour l'utiliser avec une chaîne d'alimentation en énergie selon l'une quelconque des revendications 1 à 14, constituée essentiellement par au moins un élément en forme de barrette comportant des moyens d'enclenchement prévus sur au moins deux côtés qui sont réalisés complémentaires l'un à l'autre ou identiques et qui comprennent la configuration des moyens d'enclenchement d'une traverse ou de l'une des pattes d'une chaîne d'alimentation en énergie.

16. Pièce intermédiaire selon la revendication 15, **caractérisée en ce qu'**il est prévu, à titre de moyens d'enclenchement, des saillies d'enclenchement (7) et/ou des évidements d'enclenchement (8) complémentaires et comprenant des gorges d'enclenchement (10).

17. Pièce intermédiaire selon l'une ou l'autre des revendications 15 et 16, **caractérisée en ce qu'**elle est réalisée sous forme de pièce de coin comportant des zones de fixation (6) s'étendant approximativement à angle droit les unes par rapport aux autres.

18. Pièce intermédiaire selon l'une ou l'autre des revendications 15 et 16, **caractérisée en ce qu'**elle est réalisée sous forme d'élément en T comportant trois zones de fixation (6).

19. Pièce intermédiaire selon l'une ou l'autre des revendications 15 et 16, **caractérisée en ce qu'**elle est réalisée sous forme d'élément en croix comportant quatre zones de fixation (6).

20. Insert (24) réalisé sous forme de saillie d'enclenchement pour l'utilisation dans une chaîne d'alimentation en énergie selon les caractéristiques de l'une quelconque des revendications 1 à 14, constitué par un corps de base réalisé sous forme de saillie d'enclenchement (7) connue en soi, et par un insert enfichable réalisé en une seule pièce avec celui-ci pour la mise en place dans un évidement de contour correspondant d'une anse et/ou d'une patte (1).

21. Insert selon la revendication 20, **caractérisé en ce que** l'insert enfichable est réalisé sous forme de tenon (25).
